# EUROPÄISCHE PATENTSCHRIFT

(11) **EP 4 377 598 B1**
(45) Veröffentlichungstag und Bekanntmachung des Hinweises auf die Patenterteilung: **15.10.2025**
(21) Anmeldenummer: 22738668.7
(22) Anmeldetag: 05.07.2022
(51) Int. Cl.: F16L 37/20, F17C 13/04

(54) **DRUCKBEHÄLTER**
PRESSURE VESSEL
RÉCIPIENT SOUS PRESSION

(30) Priorität: 29.07.2021 DE 102021208221
(43) Veröffentlichungstag der Anmeldung: 05.06.2024
(73) Patentinhaber: Robert Bosch GmbH, 70442 Stuttgart (DE)
(72) Erfinder: SCHAICH, Udo, 70378 Stuttgart (DE)
(86) Internationale Anmeldenummer: PCT/EP2022/068524
(87) Internationale Veröffentlichungsnummer: WO 2023/006352

(56) Entgegenhaltungen:
- EP-A1- 1 072 838
- DE-B- 1 247 091
- GB-A- 686 999
- GB-A- 689 358
- GB-A- 889 133
- KR-A- 20180 118 289
- US-A- 1 936 868
- US-A- 3 494 641
- US-A- 4 936 483
- US-A1- 2018 208 052

## Beschreibung

Die vorliegende Erfindung betrifft einen Druckbehälter, ein Brennstoffzellensystem und ein Kraftfahrzeug.

### Stand der Technik

Brennstoffzelleneinheiten als galvanische Zellen wandeln mittels Redoxreaktionen an einer Anode und Kathode kontinuierlich zugeführten Brennstoff und Oxidationsmittels in elektrische Energie um. Brennstoffzellen werden in den unterschiedlichsten stationären und mobilen Anwendungen eingesetzt, beispielweise in Häusern ohne Anschluss an ein Stromnetz oder in Kraftfahrzeugen, im Schienenverkehr, in der Luftfahrt, in der Raumfahrt und in der Schifffahrt. In der Brennstoffzelleneinheit sind eine große Anzahl an Brennstoffzellen zu einem Brennstoffzellenstapel gestapelt. In dem Brennstoffzellenstapel sind Kanäle zum Durchleiten von Brennstoff, Kanäle zum Durchleiten von Oxidationsmittel und Kanäle zum Durchleiten von Kühlmittel integriert. Der Brennstoff wird in einem Druckgasspeicher gespeichert. Dabei sind häufig mehrere Druckgasspeicher als Druckbehälter zu einem Druckbehältersystem zusammengefasst.

Eine Behälteröffnung in dem Druckbehälter wird mit einem Anschlussorgan fluidleitend und dicht mit einer Druckgasleitung verbunden. Das Anschlussorgan umfasst dabei ein Anschlusselement sowie einen Mechanismus mit einem Innen-und Außengewinde. Hierzu ist an dem Anschlusselement das Innengewinde ausgebildet und an einem Verbindungsstutzen des Druckbehälters ist das Außengewinde ausgebildet. Das Innengewinde des Anschlusselementes wird zur Fixierung des Anschlusselementes an dem Druckbehälter in das Außengewinde des Verbindungsstutzens eingeschraubt. In nachteiliger Weise ist somit für das Ein- und Ausschrauben ein mechanisches Hilfsmittel, insbesondere ein Gabelschlüssel, notwendig. Derartige mechanische Hilfsmittel erfordern jedoch einen ausreichenden Bau- und Freiraum an dem Anschlusselement. Häufig ist jedoch ein ausreichender Bau- und Freiraum nicht in einem ausreichenden Umfang an Kraftfahrzeugen vorhanden, sodass die Montage und Demontage des Anschlussorganes aufwendig und kompliziert ist.

Der Stand der Technik US 1 936 868 A zeigt eine bekannte Anschlussvorrichtung für einen Druckbehälter.

### Offenbarung der Erfindung

### Vorteile der Erfindung

Erfindungsgemäßer Druckbehälter zur Speicherung eines Fluides in einem von dem Druckbehälter begrenzten Innenraum mit einer Behälteröffnung zum Ausleiten des Fluides aus dem Innenraum des Druckbehälters und einem Anschlussorgan zur fluiddichten Fixierung des Anschlussorganes an dem Druckbehälter, das Anschlussorgan umfassend ein Anschlusselement mit einer Öffnung zum Ausleiten des Fluides durch die Behälteröffnung des Druckbehälters und durch die Öffnung des Anschlusselementes, einen Mechanismus zur formschlüssigen und lösbaren Fixierung des Anschlusselementes an dem Druckbehälter, so dass das Anschlusselement mit einer Druckkraft auf dem Druckbehälter aufliegt, wobei der Mechanismus einen ersten Spannhebel und einen zweiten Spannhebel umfasst, die mit einem Verbindungsgelenk verschwenkbar zueinander verbunden sind, so dass in einer Fixierungsposition des ersten und zweiten Spannhebels zueinander mit dem Mechanismus auf das Anschlusselement eine Druckkraft aufgebracht ist und das Anschlusselement mit der Druckkraft auf dem Druckbehälter aufliegt.

Erfindungsgemäß ist der erste Spannhebel mit einem ersten Fixierungsgelenk verschwenkbar mit dem Anschlusselement verbunden, so dass vorzugsweise mit dem ersten Fixierungsgelenk auf das Anschlusselement eine Druckkraft aufbringbar ist in der Fixierungsposition.

Erfindungsgemäß ist der zweite Spannhebel mit einem zweiten Fixierungsgelenk verschwenkbar mit dem Druckbehälter verbunden, so dass vorzugsweise mit dem zweiten Fixierungsgelenk auf den Druckbehälter eine Druckkraft aufbringbar ist in der Fixierungsposition.

Erfindungsgemäß ist der erste Spannhebel mittels des ersten Fixierungsgelenks um eine erste Fixierungsschwenkachse zu dem Anschlusselement verschwenkbar und der zweite Spannhebel ist mittels des zweiten Fixierungsgelenks um eine zweite Fixierungsschwenkachse zu dem Druckbehälter verschwenkbar.

In einer ergänzenden Ausgestaltung ist in der Fixierungsposition des ersten und zweiten Spannhebels zueinander das Anschlusselement formschlüssig zwischen dem Druckbehälter und dem Mechanismus fixiert aufgrund einer kinematischen Klemmwirkung des ersten und zweiten Spannhebels. Aufgrund der kinematischen Klemmwirkung der Fixierungsposition, d. h. der Position einer Verbindungsschwenkachse in einem anderen Halbraum als in der Abhebeposition, ist eine formschlüssigen Fixierung mittels des Mechanismus ausführbar.

In einer zusätzlichen Ausführungsform ist in einer Abhebeposition des ersten und zweiten Spannhebels zueinander mit dem Mechanismus auf das Anschlusselement keine Druckkraft aufgrund einer Vorspannung des ersten und zweiten Spannhebels aufgebracht.

In einer weiteren Variante ist in der Abhebeposition des ersten und zweiten Spannhebels zueinander eine Bewegung des Anschlusselementes weg von dem Druckbehälter ausführbar ohne einer kinematischen Klemmwirkung des ersten und zweiten Spannhebels gegen diese Bewegung.

In einer ergänzenden Variante sind der erste Spannhebel und der zweite Spannhebel mittels des Verbindungsgelenks um eine Verbindungsschwenkachse zueinander verschwenkbar.

In einer weiteren Ausführungsform sind die Verbindungsschwenkachse, die erste Fixierungsschwenkachse und die zweite Fixierungsschwenkachse im Wesentlichen parallel ausgerichtet. Im Wesentlichen parallel ausgerichtet bedeutet vorzugsweise, dass die Verbindungsschwenkachse, die erste Fixierungsschwenkachse und die zweite Fixierungsschwenkachse mit einer Abweichung von weniger als 30°, 20°, 10° oder 5° parallel zueinander ausgerichtet sind.

In einer zusätzlichen Ausgestaltung teilt eine fiktive Teilungsebene den Raum an dem Druckbehälter in einen ersten Halbraum und einen zweiten Halbraum und die fiktive Teilungsebene ist im Wesentlichen parallel zu der ersten und zweiten Fixierungsschwenkachse ausgerichtet und die erste und zweite Fixierungsschwenkachse schneiden die fiktive Teilungsebene oder die erste und zweite Fixierungsschwenkachse liegen vollständig in der fiktiven Teilungsebene. Im Wesentlichen parallel ausgerichtet bedeutet vorzugsweise, dass die fiktive Teilungsebene mit einer Abweichung von weniger als 30°, 20°, 10° oder 5° parallel zu der ersten und zweiten Fixierungsschwenkachse ausgerichtet ist.

In einer ergänzenden Ausführungsform ist in der Fixierungsposition die Verbindungsschwenkachse in dem ersten Halbraum angeordnet, insbesondere mit einem Abstand von wenigstens 1 cm, 2 cm, 3 cm, 5 cm oder 10 cm zu der fiktiven Teilungsebene.

In einer weiteren Variante ist in der Abhebeposition die Verbindungsschwenkachse in dem zweiten Halbraum angeordnet, insbesondere mit einem Abstand von wenigstens 1 cm, 2 cm, 3 cm, 5 cm oder 10 cm zu der fiktiven Teilungsebene.

Vorzugsweise ist die mit dem Mechanismus auf das Anschlusselement aufgebrachte Druckkraft aufgebracht indem der erste Spannhebel mit einer Druckkraft und vorzugsweise einem Biegemoment vorgespannt ist und der zweite Spannhebel mit einer Zugkraft und vorzugsweise einem Biegemoment vorgespannt ist.

Erfindungsgemäßes Brennstoffzellensystem, insbesondere für ein Kraftfahrzeug, umfassend eine Brennstoffzelleneinheit, wenigstens einen Druckbehälter, wobei der wenigstens eine Druckbehälter als ein in dieser Schutzrechtsanmeldung beschriebener Druckbehälter ausgebildet ist.

Erfindungsgemäßes Kraftfahrzeug, umfassend einen Antriebsmotor als Elektromotor und/oder Verbrennungsmotor, wenigstens einen mit einem gasförmigen Brennstoff befüllten Druckbehälter, wobei der wenigstens Druckbehälter als ein in dieser Schutzrechtsanmeldung beschriebener Druckbehälter ausgebildet ist und/oder das Kraftfahrzeug ein in dieser Schutzrechtsanmeldung beschriebenes Brennstoffzellensystem umfasst.

In einer weiteren Ausführungsform umfasst das Brennstoffzellensystem eine Gasfördervorrichtung zur Förderung eines gasförmigen Oxidationsmittels zu den Brennstoffzellen

Erfindungsgemäßes Antriebssystem, insbesondere für ein Kraftfahrzeug, umfassend einen Antriebsmotor und wenigstens einen Druckbehälter, wobei der Druckbehälter als ein in dieser Schutzrechtsanmeldung beschriebener Druckbehälter ausgebildet ist.

In einer zusätzlichen Ausgestaltung ist der Antriebsmotor des Antriebssystems ein Elektromotor, welcher mit elektrischer Energie aus einem Brennstoffzellensystem betreibbar ist und das Antriebssystem umfasst das Brennstoffzellensystem und/oder der Antriebsmotor ist ein Verbrennungsmotor, welcher mit dem Brennstoff aus dem wenigstens einem Druckbehälter betreibbar ist.

In einer weiteren Variante ist an dem Anschlusselement eine Führungsfläche und an dem Druckbehälter eine Gegenführungsfläche ausgebildet und die Führungsfläche liegt auf der Gegenführungsfläche auf, so dass aufgrund der formschlüssigen Verbindung zwischen der Führungsfläche des Anschlusselementes und der Gegenführungsfläche des Druckbehälters eine Bewegung parallel zu der Verbindungsschwenkachse, der ersten Fixierungsschwenkachse und der zweiten Fixierungsschwenkachse zwischen dem Anschlusselement und dem Druckbehälter blockiert ist.

In einer weiteren Variante ist an dem Anschlusselement eine Führungsfläche und an dem Druckbehälter eine Gegenführungsfläche ausgebildet und die Führungsfläche liegt auf der Gegenführungsfläche auf, so dass bei der formschlüssigen Verbindung zwischen der Führungsfläche des Anschlusselementes und der Gegenführungsfläche des Druckbehälters und aufgrund der Geometrie der Führungsfläche und der Gegenführungsfläche eine Bewegung senkrecht zu der Verbindungsschwenkachse, der ersten Fixierungsschwenkachse und der zweiten Fixierungsschwenkachse und/oder parallel zu der zentrischen Längsachse des Druckbehälters zwischen dem Anschlusselement und dem Druckbehälter ausführbar ist. Das Anschlusselement kann somit von dem Druckbehälter weg bewegt werden in Richtung der zentrischen Längsachse in der Abhebeposition des Mechanismus.

In einer ergänzenden Ausgestaltung fluchten bei der Fixierung des Anschlussorganes an dem Druckbehälter die Behälteröffnung des Druckbehälters mit der Öffnung des Anschlusselementes. Das Fluid, insbesondere der Brennstoff, kann damit einfach zuerst durch die Behälteröffnung und anschließend durch die Öffnung des Anschlusselementes geleitet werden.

In einer ergänzenden Ausführungsform ist in der Fixierungsposition das Verbindungsgelenk in dem ersten Halbraum angeordnet, insbesondere mit einem Abstand von wenigstens 1 cm, 2 cm, 3 cm, 5 cm oder 10 cm zu der fiktiven Teilungsebene.

In einer weiteren Variante ist in der Abhebeposition das Verbindungsgelenk in dem zweiten Halbraum angeordnet, insbesondere mit einem Abstand von wenigstens 1 cm, 2 cm, 3 cm, 5 cm oder 10 cm zu der fiktiven Teilungsebene.

In einer zusätzlichen Ausgestaltung weist der Mechanismus mit dem ersten und zweiten Spannhebel in der Fixierungsposition eine formschlüssige Klemmwirkung auf, so dass eine auf das Anschlusselement aufgebracht Kraft zum Bewegen des Anschlusselementes weg von dem Druckbehälter, insbesondere in einer Richtung parallel zu der zentrischen Längsachse, von dem ersten und zweiten Spannhebel blockiert ist und aufgrund der Kinematik diese auf das Anschlusselement aufgebrachte Kraft kein ausreichendes Drehmoment zum Bewegen des ersten Spannhebels von der Fixierungsposition über die labile Zwischenposition bis in die Abhebeposition verursacht.

In einer weiteren Ausführungsform ist die in einer labilen Zwischenposition des ersten und zweiten Spannhebels die fiktive Teilungsebene im Wesentlichen, insbesondere mit einer Abweichung von weniger als 30°, 20°, 10° oder 5°, parallel zu der Verbindungsschwenkachse ausgerichtet und die Verbindungsschwenkachse schneidet die fiktive Teilungsebene. Vorzugsweise liegt in der labilen Zwischenposition die Verbindungsschwenkachse vollständig in der fiktiven Teilungsebene.

In einer ergänzenden Ausgestaltung ist in der labilen Zwischenposition der Abstand zwischen der Verbindungsschwenkachse und der zweiten Fixierungsschwenkachse größer, insbesondere um 1 %, 2 %, 3 %, 5 %, 7 % oder 10 % größer, als in der Fixierungsposition. Aufgrund des größeren Abstandes in der labilen Zwischenposition als in der Fixierungsposition zwischen der Verbindungsschwenkachse und der zweiten Fixierungsschwenkachse sind in der labilen Zwischenposition die Druckkräfte in dem ersten Spannhebel und die Zugkräfte in dem zweiten Spannhebel größer als in der Fixierungsposition, sodass zum Bewegen bzw. zum Verschwenken des ersten und zweiten Spannhebels von der stabilen Fixierungsposition in die labile Zwischenposition eine Kraft auf den ersten Spannhebel aufgebracht werden muss. Ein unbeabsichtigtes Bewegen bzw. Verschwenken des Mechanismus von der Fixierungsposition in die Abhebeposition ist somit ausgeschlossen, weil zum Bewegen von der Fixierungsposition in die Abhebeposition die labile Zwischenposition überwunden werden muss. In der labilen Zwischenposition tritt somit an dem Mechanismus der maximale Abstand zwischen der Verbindungsschwenkachse und der zweiten Fixierungsschwenkachse und die maximale Vorspannung des ersten und zweiten Spannhebels auf.

In einer ergänzenden Ausgestaltung ist die von dem Mechanismus auf das Anschlusselement aufgebrachte Druckkraft in der Fixierungsposition aufgebracht indem der erste Spannhebel mit einer Zugkraft und vorzugsweise einem Biegemoment vorgespannt ist und/oder der zweite Spannhebel mit einer Druckkraft und vorzugsweise einem Biegemoment vorgespannt ist.

In einer weiteren Ausgestaltung unterscheidet sich zwischen der labilen Zwischenposition und der Fixierungsposition die Drehwinkelposition des ersten und zweiten Spannhebels zueinander um wenigstens 3°, 5°, 10° oder 20°.

In einer weiteren Variante umfasst der Mechanismus einen Anschlag zur Begrenzung des Schwenkbewegung des ersten und zweiten Spannhebels bis zu der Fixierungsposition.

In einer ergänzenden Ausgestaltung ist das Anschlusselement ringförmig und/oder zylindermantelförmig und/oder rohrförmig und/oder scheibenförmig mit einer Öffnung ausgebildet.

In einer zusätzlichen Ausgestaltung ist der erste Spannhebel und/oder zweite Spannhebel und/oder Verbindungsbolzen und/oder erste Fixierungsbolzen und/oder zweite Fixierungsbolzen aus Metall, insbesondere Stahl, ausgebildet.

In einer weiteren Variante umfasst der Mechanismus zwei erste Spannhebel, zwei zweite Spannhebel, zwei Verbindungsgelenke, zwei erste Fixierungsgelenke und zwei zweite Fixierungsgelenke. Je ein erster und zweiten Spannhebel bilden somit einen Teilmechanismus.

Vorzugsweise umfasst das Brennstoffzellensystem mit mehreren Druckbehältern ein Druckbehältersystem.

In einer ergänzenden Ausgestaltung sind in einem Druckbehältersystem mehrere Druckbehälter mit einem Rail fluidleitend für das Fluid, insbesondere den Brennstoff, miteinander verbunden und das Rail ist mit dem Anschlussorgan mit den Druckbehältern verbunden, insbesondere ist je ein Druckbehälter mit einem Anschlussorgan mit dem Rail in dem Druckbehältersystem verbunden.

In einer zusätzlichen Ausgestaltung ist in das Anschlussorgan, insbesondere Anschlusselement, ein Betriebsventil und/oder ein Überdruckventil und/oder ein TPRD und/oder ein Temperatursensor eingebaut oder integriert.

In einer weiteren Variante ist die Bewegung des ersten und zweiten Spannhebels zwischen der Fixierungsposition und Abhebeposition und vorzugsweise umgekehrt, insbesondere ausschließlich, eine Schwenkbewegung.

Vorzugsweise ist das Betriebsventil aktiv schließbar und öffenbar, insbesondere mittels eines Elektromagneten, und vorzugsweise in Abhängigkeit von dem Betriebszustand der Brennstoffzelleneinheit. Während des Betriebes der Brennstoffzelleneinheit ist somit das Betriebsventil geöffnet und in einem abgeschalteten Betriebszustand der Brennstoffzelleneinheit ist das Betriebsventil geschlossen.

Vorzugsweise ist der Brennstoff Wasserstoff, wasserstoffreiches Gas, Reformatgas oder Erdgas.

Zweckmäßig sind die Brennstoffzellen im Wesentlichen eben und/oder scheibenförmig ausgebildet.

In einer ergänzenden Variante ist das Oxidationsmittel Luft mit Sauerstoff oder reiner Sauerstoff.

Vorzugsweise ist die Brennstoffzelleneinheit eine PEM-Brennstoffzelleneinheit mit PEM-Brennstoffzellen.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: eine stark vereinfachte Darstellung eines Brennstoffzellensystems mit einer Brennstoffzelleneinheit,
- Fig. 2: einen Querschnitt eines Druckbehältersystems mit drei Druckbehältern,
- Fig. 3: einen Längsschnitt des Druckbehälters gemäß Fig. 2 als Druckgasspeicher,
- Fig. 4: einen Mechanismus eines Anschlussorganes für den Druckbehälter in einer Abhebeposition,
- Fig. 5: den Mechanismus gemäß Fig. 8 des Anschlussorganes für den Druckbehälter in einer Fixierungsposition,
- Fig. 6: den Druckbehälter mit dem Anschlussorgan in der Fixierungsposition des Mechanismus und
- Fig. 7: eine Seitenansicht eines Kraftfahrzeuges.

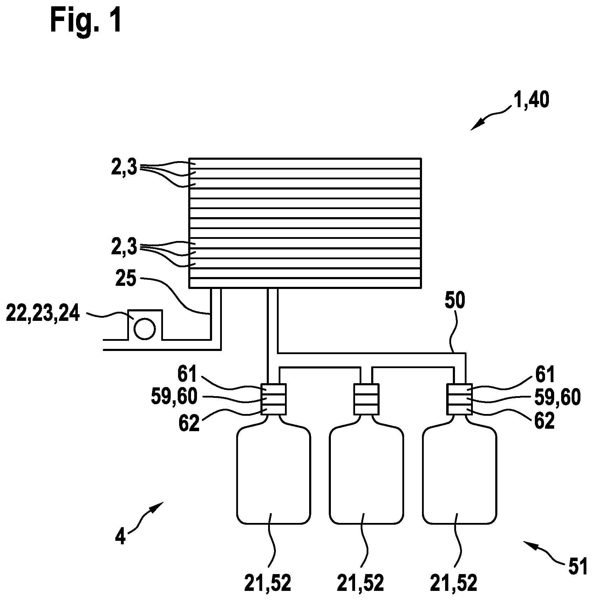

In Fig. 1 ist stark vereinfacht ein Brennstoffzellensystem 4 dargestellt. Das Brennstoffzellensystem 4 umfasst eine Brennstoffzelleneinheit 1 und mehrere Druckgasspeicher 21 als Druckbehälter 52, welche ein Druckbehältersystem 51 bilden. In der Brennstoffzelleneinheit 1 sind eine große Anzahl an Brennstoffzellen 2, nämlich PEM-Brennstoffzellen 3, gestapelt zu einem Brennstoffzellenstapel 40 als einem Brennstoffzellenstack 40. In dem Brennstoffzellenstack 40 sind somit beispielsweise 400 Brennstoffzellen 2 gestapelt. Die Brennstoffzelleneinheit 1 umfasst neben dem Brennstoffzellenstack 40 ein nicht dargestelltes Gehäuse und eine nicht dargestellte Anschlussplatte. Das Gehäuse und die Anschlussplatte umschließen dabei den Brennstoffzellenstack 40. In dem Brennstoffzellenstack 40 sind Kanäle zum Durchleiten von Brennstoff Wasserstoff, Kanäle zum Durchleiten von Oxidationsmittel Luft und Kanäle zum Durchleiten eines Kühlmittels ausgebildet. Die Prozessfluide Brennstoff, Oxidationsmittel und Kühlmittel werden durch nicht dargestellte Öffnungen in der nicht dargestellten Anschlussplatte in die Kanäle des Brennstoffzellenstacks 40 eingeleitet. Das Kühlmittel, insbesondere eine Kühlflüssigkeit, dient zum Temperieren, insbesondere Kühlung, des Brennstoffzellenstacks 40 auf eine vorgesehene Betriebstemperatur. Das Oxidationsmittel Luft wird mit einer Gasfördereinrichtung 22, beispielsweise einem Gebläse 23 oder einem Kompressor 24, durch eine Zufuhrleitung 25 für Oxidationsmittel in die Brennstoffzelleneinheit 1 eingeleitet. In dem Druckbehältersystem 51 sind 3 mit Wasserstoff befüllte Druckbehälter 52 angeordnet und durch eine Druckgasleitung 50 wird der Brennstoff Wasserstoff in den Druckbehältern 52 in die Brennstoffzelleneinheit 1 eingeleitet, d. h. in die Kanäle für Brennstoff in dem Brennstoffzellenstack 40.

In dem Brennstoffzellensystem 4, d. h. in der Brennstoffzelleneinheit 1, wird die elektrochemische Energie des Brennstoffes in elektrische Energie umgewandelt.

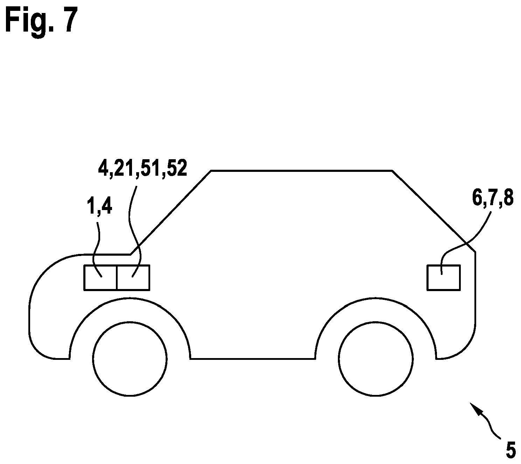

Diese elektrische Energie wird an einem Kraftfahrzeug 5 (Fig. 7) zum Antrieb eines Elektromotors 6 genutzt. Der Elektromotors 6, welcher von elektrischer Energie aus der Brennstoffzelleneinheit 1 angetrieben ist, dient zum Antrieb und zur Traktion des Kraftfahrzeuges 5. Abweichend hiervon kann der Brennstoff in den Druckbehältern 52 auch eingesetzt werden, um einen Verbrennungsmotor 7 des Kraftfahrzeuges 5 zu betreiben.

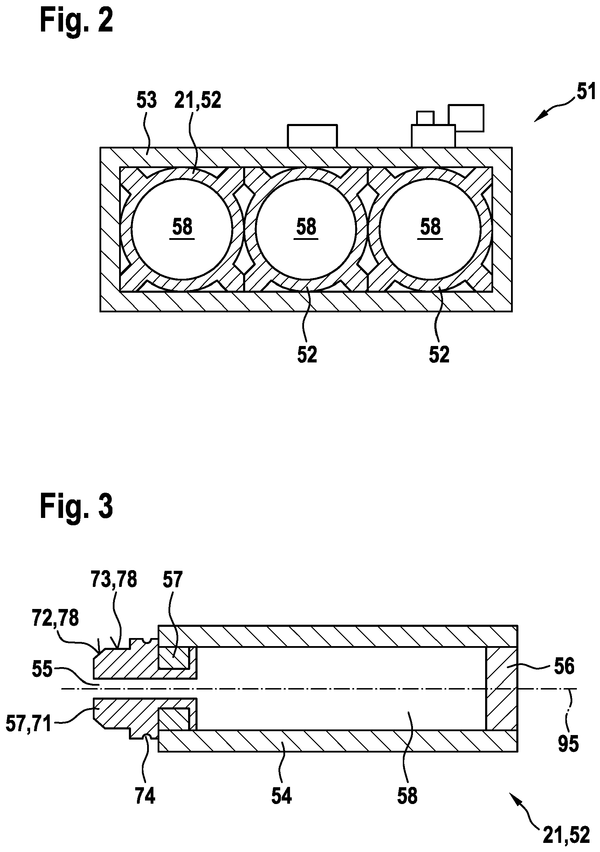

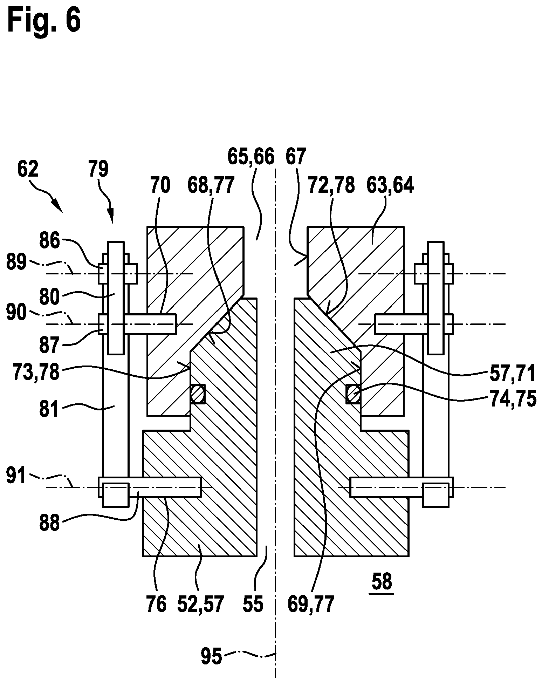

In Fig. 2 ist das Druckbehältersystem 51 mit 3 Druckbehältern 52 als Druckgasspeicher 21 dargestellt. Die 3 Druckbehälter 52 sind im Querschnitt im Wesentlichen zylindermantelförmig ausgebildet und innerhalb eines Gehäuses 53 des Druckbehältersystems 1 angeordnet. Das Gehäuse 53 ist im Wesentlichen quaderförmig ausgebildet. In Fig. 3 ist ein Längsschnitt des Druckbehälters 52 dargestellt. Der Druckbehälter 52 ist symmetrisch zu einer zentrischen Symmetrieachse 95 und zentrischen Längsachse 95 ausgebildet. Der Druckbehälter 52 begrenzt einen Innenraum 58, welcher mit Brennstoff als Wasserstoff unter einem Druck von ungefähr 15 bis 800 bar befüllt ist. Der Innenraum 58 ist von einer zylindermantelförmigen Behälterseitenwandung 54 und einer Rückwandung 56 begrenzt. Außerdem ist der Innenraum 58 von einer Vorderwandung 57 begrenzt oder von einer individuell angeformten Verlängerung der Behälterseitenwandung 54, welche hier als Vorderwandung 57 fungiert. Die Behälterseitenwandung 54, die Rückwandung 56 und die Vorderwandung 57 sind aus Metall, insbesondere Stahl oder Aluminium, und/oder aus Kunststoff, insbesondere faserverstärktem Kunststoff, ausgebildet. In der Vorderwandung 57 ist eine zentrische, im Wesentlichen kreisförmige Behälteröffnung 55 ausgebildet. Die Behälteröffnung 55 ist auch in einem Kanal 55 in einem Verbindungsstutzen 71 ausgebildet. Der Verbindungsstutzen 71 und die Vorderwandung 57 des Druckbehälters 52 sind einteilig ausgebildet und aus Metall, insbesondere Stahl. An dem Verbindungsstutzen 71 ist ein Anschlussorgan 62 (Fig. 6) fixiert. An dem Anschlussorgan 62 ist vorzugsweise ein TPRD 60 (temperatur pressure relief device), insbesondere als Überdruckventil 59, befestigt. An dem TPRD 60 ist ein Betriebsventil 61 fixiert (Fig. 1). Der aus dem Innenraum 58 des Druckbehälters 52 ausgeleitete Brennstoff strömt somit durch den Kanal 55, das Anschlussorgan 62, das TPRD 60 und das Betriebsventil 61 in dieser Reihenfolge. Das Betriebsventil 61, beispielsweise ein Magnetventil 61, wird geöffnet, soweit für den normalen Betrieb der Brennstoffzelleneinheit 1 Wasserstoff als Brennstoff benötigt wird und bei einer abgeschalteten Brennstoffzelleneinheit 1 ist das Betriebsventil 61 geschlossen. Das Betriebsventil 61 dient somit zur Versorgung der Brennstoffzelleneinheit 1 mit Brennstoff aus dem Druckbehälter 52 oder dem Druckbehältersystem 51. Abweichend hiervon kann an dem Anschlussorgan 62 kein TPRD 60, jedoch das Betriebsventil 61 befestigt sein (nicht dargestellt).

An dem Verbindungsstutzen 71 der Vorderwandung 57 des Druckbehälters 52 ist ein erster kegelmantelförmige Abschnitt 72 und ein zweiter zylindermantelförmige Abschnitt 73 ausgebildet. Der erste kegelmantelförmige Abschnitt 72 und der zweite zylindermantelförmige Abschnitt 73 bilden eine Gegenführungsfläche 78 des Verbindungsstutzens 71. Der Verbindungsstutzen 71 ist symmetrisch zu der zentrischen Längsachse 95 ausgebildet. An dem Verbindungsstutzen 71 ist außerdem eine Ringnut 74 ausgebildet und in der Ringnut 74 ist eine Dichtung 75 als eine O-Ringdichtung 75 oder einer anderen hochdruckgeeigneten Abdichtung angeordnet (Fig. 3 und 6).

Das Anschlussorgan 62 umfasst im Wesentlichen ein Anschlusselement 63 und einen Mechanismus 79. Das Anschlusselement 63 ist im Wesentlichen von einem Anschlussring 64 ausgebildet. Der Anschlussring 64 ist im Wesentlichen rohrförmig mit einer kleinen axialen Ausdehnung in Richtung der zentrischen Längsachse 95 ausgebildet. An einer radialen Innenseite des Anschlussringes 64 als dem Anschlusselement 63 ist ein erster zylindermantelförmige Abschnitt 67, ein zweiter kegelmantelförmige Abschnitt 68 und ein dritter zylindermantelförmige Abschnitt 69 ausgebildet. Der erste zylindermantelförmige Abschnitt 67 als einem zu dem Druckbehälter 52 abgewandten Ende des Anschlusselementes 63 weist einen kleineren Durchmesser auf als der dritte zylindermantelförmige Abschnitt 69. Der zweite kegelmantelförmige Abschnitt 68 fungiert somit als konische Aufweitung zwischen dem ersten zylindermantelförmige Abschnitt 67 und dem dritten zylindermantelförmige Abschnitt 69 (Fig. 6). Der zweite kegelmantelförmige Abschnitt 68 und der dritte zylindermantelförmige Abschnitt 69 bildet eine Führungsfläche 77 an dem Anschlusselement 63. Die radiale Innenseite des Anschlusselementes 63, insbesondere der erste zylindermantelförmige Abschnitt 67, begrenzt eine Öffnung 65 als einen Kanal 66 zum Durchleiten von Brennstoff aus dem Innenraum 58 des Druckbehälters 52. Der Druckbehälter 52 mit dem Kanal 55 als der Behälteröffnung 55 fungiert somit zum Ausleiten des Brennstoffes aus dem Innenraum 58, welcher anschließend durch den Kanal 66 des Anschlusselementes 63 beim Ausleiten des Brennstoffes aus dem Druckbehälter 52 geleitet wird.

Der Mechanismus 79 umfasst einen ersten Spannhebel 80 und einen zweiten Spannhebel 81. Dabei sind an dem Anschlusselement 63 insgesamt 2 erste Spannhebel 80 und 2 zweite Spannhebel 81 angeordnet, wobei im Nachfolgendem aus Vereinfachungsgründen jeweils nur ein erster Spannhebel 80 und ein zweiter Spannhebel 81 beschrieben werden. An dem zweiten Spannhebel 81 ist ein Betätigungshebel 82 als Verlängerung ausgebildet. Der Betätigungshebel 82 dient dazu, damit auf den zweiten Spannhebel 81 manuell von Hand eine Kraft aufbringbar ist. Der erste Spannhebel 80 und der zweite Spannhebel 81 sind mit einem Verbindungsgelenk 83 verschwenkbar zueinander verbunden. Hierzu ist an dem ersten Spannhebel 80 eine Verbindungbohrung ausgebildet und an dem zweiten Spannhebel 81 ist ebenfalls eine Verbindungsbohrung ausgebildet und in den Verbindungsbohrungen des ersten und zweiten Spannhebels 80, 81 ist ein Verbindungsbolzen 86 angeordnet. Dadurch sind der erste Spannhebel 80 und der zweite Spannhebel 81 um eine Verbindungsschwenkachse 89 verschwenkbar zueinander gelagert. Der erste Spannhebel 80 ist mit einem ersten Fixierungsgelenk 84 verschwenkbar um eine erste Fixierungsschwenkachse 90 an dem Anschlusselement 63 gelagert. Hierzu ist an dem Anschlusselement 63 eine Haltebohrung 70 ausgebildet und in dem ersten Spannhebel 80 ist eine Verbindungbohrung ausgebildet und in der Verbindungsbohrung sowie in der Haltebohrung 70 ist ein erster Fixierungsbolzen 87 angeordnet. In analoger Weise ist der zweite Spannhebel 81 mit einem zweiten Fixierungsgelenk 85 um eine zweite Fixierungsschwenkachse 91 verschwenkbar an der Vorderwandung 57, insbesondere dem Verbindungsstutzen 71, gelagert. Hierzu ist an der Vorderwandung 57 eine Haltebohrung 76 ausgebildet und in dem zweiten Spannhebel 81 ist eine Verbindungbohrung ausgebildet und in der Verbindungsbohrung sowie in der Haltebohrung 71 ist der zweite Fixierungsbolzen 88 angeordnet. Die Verbindungsschwenkachse 89, die erste Fixierungsschwenkachse 90 und die zweite Fixierungsschwenkachse 91 sind im Wesentlichen parallel ausgerichtet. Eine fiktive Teilungsebene 92 ist parallel zu der ersten Fixierungsschwenkachse 90 und der zweiten Fixierungsschwenkachse 91 ausgerichtet und zusätzlich schneiden die Fixierungsschwenkachse 90, 91 die fiktive Teilungsebene 92, d. h. die beiden Fixierungsschwenkachsen 90, 91 sind in der fiktiven Teilungsebene 92. Die fiktive Teilungsebene 92 teilt den Raum in der Umgebung des Mechanismus 79 in einen ersten Halbraum 93 und einen zweiten Halbraum 94.

Das Anschlussorgan 62 kann in einfacher Weise an dem Druckbehälter 52 fixiert werden. Das Anschlusselement 63 und der Mechanismus 79 mit im Wesentlichen dem ersten Spannhebel 80 und dem zweiten Spannhebel 81 als Kurbeltrieb 79 sind zunächst als getrennte Bauteile ausgebildet. Zunächst wird der Anschlussring 64 auf den Verbindungsstutzen 71 aufgelegt, sodass der zweite kegelmantelförmige Abschnitt 68 an der radialen Innenseite des Anschlusselementes 63 auf dem ersten kegelmantelförmigen Abschnitt 72 des Verbindungsstutzens 71 aufliegt und der dritte zylindermantelförmige Abschnitt 69 des Anschlusselementes 63 auf dem zweiten zylindermantelförmige Abschnitt 73 des Verbindungsstutzens 71 aufliegt (Fig. 6). Dadurch liegt die Dichtung 75 auf dem dritten zylindermantelförmige Abschnitt 69 auf und dichtet die Behälteröffnung 55 bezüglich der Umgebung ab, sodass der Brennstoff fluiddicht von der Behälteröffnung 55 in den Kanal 66 des Anschlusselementes 63 einströmen kann. Anschließend wird der erste Fixierungsbolzen 87 des ersten Spannhebels 80 in die Haltebohrung 70 des Anschlusselementes 63 eingeführt und der zweite Fixierungsbolzen 88 des zweiten Spannhebels 81 in die Haltebohrung 76 der Vorderwandung 57 eingeführt.

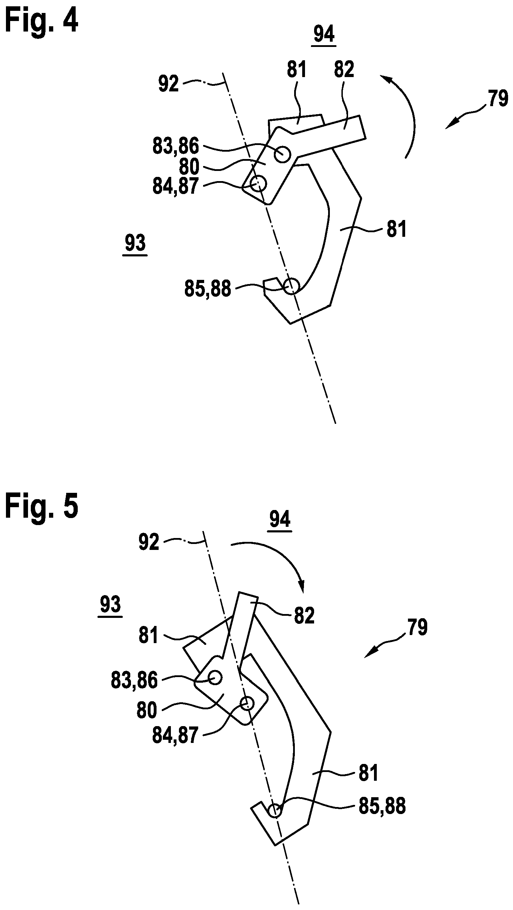

Der erste Spannhebel 80 und der zweite Spannhebel 81 befinden sich in der in Fig. 4 dargestellten Abhebeposition zueinander, sodass von dem ersten Fixierungsbolzen 87 keine Druckkraft auf das Anschlusselement 63 aufgebracht ist, mit welcher das Anschlusselement 63 an der Führungsfläche 77 auf die Gegenführungsfläche 78 gedrückt ist. In der in Fig. 4 dargestellten Abhebeposition des ersten Spannhebels 80 und des zweiten Spannhebels 81 befindet sich die erste Fixierungsschwenkachse 90 in dem zweiten Halbraum 94. Zum Bewegen des ersten Spannhebels 80 und des zweiten Spannhebels 81 in die Fixierungsposition wird manuell mit dem Betätigungshebel 82 eine Kraft aufgebracht, sodass der erste Spannhebel 80 und der zweite Spannhebel 81 in die in Fig. 5 dargestellte Fixierungsposition zueinander verschwenkt werden. In der Fixierungsposition gemäß Fig. 5 ist der zweite Spannhebel 81 mit einer Zugkraft und aufgrund der gekrümmten Ausbildung des zweiten Spannhebels 81 zusätzlich auch mit einem Biegemoment vorgespannt. Diese in dem zweiten Spannhebel 81 anliegenden Zugkräfte werden mittels des Verbindungsbolzen 86 als Druckkräfte auf den ersten Spannhebel 80 aufgebracht und diese Druckkräfte, welche in dem ersten Spannhebel 80 wirken, werden mit dem ersten Fixierungsbolzen 87 auf das Anschlusselement 63 übertragen. Dadurch wird in der Fixierungsposition das Anschlusselement 63 mit der Druckkraft in Richtung der zentrischen Längsachse 95 auf den Verbindungsstutzen 71 gedrückt und der zweite Fixierungsbolzen 88 bringt auf den Druckbehälter 52 eine entgegengesetzt gerichtete Druckkraft auf.

Während der Bewegung des ersten Spannhebels 80 und des zweiten Spannhebels 81 von der Abhebeposition in die Fixierungsposition gibt es eine labile Zwischenposition und in der Zwischenposition schneidet die erste Fixierungsschwenkachse 90 die fiktive Teilungsebene 92 und die erste Fixierungsschwenkachse 90 liegt vollständig in der fiktiven Teilungsebene 92. In dieser labilen Zwischenposition ist der Abstand zwischen der Verbindungsschwenkachse 89 und der zweiten Fixierungsschwenkachse 91 größer als in der Fixierungsposition. Zum Verschwenken des ersten Spannhebels 80 und des zweiten Spannhebels 81 von der Fixierungsposition in die Abhebeposition ist es somit notwendig während des Verschwenkens des ersten Spannhebels 80 und des zweiten Spannhebels 81 von der Fixierungsposition in die labile Zwischenposition ständig eine Kraft auf den Betätigungshebel 82 aufzubringen, weil während dieses Verschwenkens der Abstand zwischen der ersten Fixierungsschwenkachse 90 und der zweiten Fixierungsschwenkachse 91 vergrößert wird und damit der zweite Spannhebel 81 gedehnt und der erste Spannhebel 80 gestaucht wird als Vergrößerung der Vorspannung. Dadurch ist sichergestellt, dass sich der erste Spannhebel 80 und der zweite Spannhebel 81 nicht unbeabsichtigt von der stabilen Fixierungsposition in die Abhebeposition bewegt, weil nur mit einem entsprechenden großen Kraftaufwand zunächst die labile Zwischenposition aktiv nur mittels des manuellen Aufbringens einer Kraft auf den Betätigungshebel 82 erreicht werden kann. In der Fixierungsposition kann das Anschlusselement 63 nicht in Richtung der zentrischen Längsachse 95 von dem Druckbehälter 52 weg bewegt werden, weil das Anschlusselement 63 mit der Druckkraft in Richtung der zentrischen Längsachse 95 auf dem Druckbehälter 52 gedrückt ist und der erste und zweite Spannhebel 80, 81 eine formschlüssige Klemm- und Blockierwirkung aufweisen wegen der Fixierungsposition des ersten und zweiten Spannhebels 80, 81 zueinander. Für die Demontage des Anschlussorganes 62 von dem Druckbehälter 52 sind die oben beschriebenen Vorgänge in umgekehrter Reihenfolge auszuführen.

In dem Druckbehältersystem 51 sind mehrere Druckbehälter 52 mit einem nicht dargestellten Rail fluidleitend miteinander verbunden. Zur fluidleitenden Verbindung des Rails mit den Druckbehältern 52 sind die Druckbehälter 52 jeweils mit dem Anschlussorgan 62 fluiddicht mit dem Rail verbunden (nicht dargestellt).

Insgesamt betrachtet sind mit dem erfindungsgemäßen Druckbehälter 52, dem erfindungsgemäßen Brennstoffzellensystem 4 und dem erfindungsgemäßen Kraftfahrzeug 5 wesentliche Vorteile verbunden. Das Anschlussorgan 62 zur fluiddichten Verbindung des Innenraumes 58 des Druckbehälters 52 als dem Druckgasspeicher 21 mit der Druckgasleitung 50 kann in besonders einfacher Weise an dem Druckbehälter 52 montiert und demontiert werden. Der Druckbehälter 52 kann beispielsweise auch in dem mit Wasserstoff angetriebenen Kraftfahrzeug 5 eingesetzt werden, der mit dem Brennstoffzellensystem 4 und dem Elektromotor 6 als Antriebsmotor 8 angetrieben wird. Außerdem kann der Druckbehälter 52 auch in dem Kraftfahrzeug 5 mit dem mit Wasserstoff angetriebenen Verbrennungsmotor 7 als dem Antriebsmotor 8 eingesetzt werden. Auch bei schwierig zugänglichen Druckbehältern 52 bei beengten Raumverhältnissen kann der Betätigungshebel 82 einfach bedient werden. Dies ist insbesondere in der Kraftfahrzeugtechnik von Vorteil.

## Patentansprüche

1. Druckbehälter (52) zur Speicherung eines Fluides in einem von dem Druckbehälter (52) begrenzten Innenraum (58) mit einer Behälteröffnung (55) zum Ausleiten des Fluides aus dem Innenraum (58) des Druckbehälters (52) und einem Anschlussorgan (62) zur fluiddichten Fixierung des Anschlussorganes (62) an dem Druckbehälter (52), das Anschlussorgan (62) umfassend
- ein Anschlusselement (63) mit einer Öffnung (65) zum Ausleiten des Fluides durch die Behälteröffnung (55) des Druckbehälters (52) und durch die Öffnung (65) des Anschlusselementes (63),
- einen Mechanismus (79) zur formschlüssigen und lösbaren Fixierung des Anschlusselementes (63) an dem Druckbehälter (52), so dass das Anschlusselement (63) mit einer Druckkraft auf dem Druckbehälter (52) aufliegt,
der Mechanismus (79) einen ersten Spannhebel (80) und einen zweiten Spannhebel (81) umfasst, die mit einem Verbindungsgelenk (83) verschwenkbar zueinander verbunden sind, so dass in einer Fixierungsposition des ersten und zweiten Spannhebels (80, 81) zueinander mit dem Mechanismus (79) auf das Anschlusselement (63) eine Druckkraft aufgebracht ist und das Anschlusselement (63) mit der Druckkraft auf dem Druckbehälter (52) aufliegt,
**dadurch gekennzeichnet, dass**
der erste Spannhebel (80) mit einem ersten Fixierungsgelenk (84) verschwenkbar mit dem Anschlusselement (63) verbunden ist,
der zweite Spannhebel (81) mit einem zweiten Fixierungsgelenk (85) verschwenkbar mit dem Druckbehälter (52) verbunden ist, und
der erste Spannhebel (80) mittels des ersten Fixierungsgelenks (84) um eine erste Fixierungsschwenkachse (90) zu dem Anschlusselement (63) verschwenkbar ist
und
der zweite Spannhebel (81) mittels des zweiten Fixierungsgelenks (85) um eine zweite Fixierungsschwenkachse (91) zu dem Druckbehälter (52) verschwenkbar ist.

2. Druckbehälter nach Anspruch 1,
**dadurch gekennzeichnet, dass**
in der Fixierungsposition des ersten und zweiten Spannhebels (80, 81) zueinander das Anschlusselement (63) formschlüssig zwischen dem Druckbehälter (52) und dem Mechanismus (79) fixiert ist aufgrund einer kinematischen Klemmwirkung des ersten und zweiten Spannhebels (80, 81).

3. Druckbehälter nach Anspruch 1 oder 2,
**dadurch gekennzeichnet, dass**
in einer Abhebeposition des ersten und zweiten Spannhebels (80, 81) zueinander mit dem Mechanismus (79) auf das Anschlusselement (63) keine Druckkraft aufgrund einer Vorspannung des ersten und zweiten Spannhebels (80, 81) aufgebracht ist.

4. Druckbehälter nach einem oder mehreren der vorhergehenden Ansprüche,
**dadurch gekennzeichnet, dass**
in der Abhebeposition des ersten und zweiten Spannhebels (80, 81) zueinander eine Bewegung des Anschlusselementes (63) weg von dem Druckbehälter (52) ausführbar ist ohne einer kinematischen Klemmwirkung des ersten und zweiten Spannhebels (80, 81) gegen diese Bewegung.

5. Druckbehälter nach einem oder mehreren der vorhergehenden Ansprüche,
**dadurch gekennzeichnet, dass**
der erste Spannhebel (80) und der zweite Spannhebel (81) mittels des Verbindungsgelenks (83) um eine Verbindungsschwenkachse (89) zueinander verschwenkbar sind.

6. Druckbehälter nach Anspruch 1,
**dadurch gekennzeichnet, dass**
die Verbindungsschwenkachse (89), die erste Fixierungsschwenkachse (90) und die zweite Fixierungsschwenkachse (91) im Wesentlichen parallel ausgerichtet sind.

7. Druckbehälter nach einem oder mehreren der vorhergehenden Ansprüche,
**dadurch gekennzeichnet, dass**
eine fiktive Teilungsebene (92) den Raum an dem Druckbehälter (52) in einen ersten Halbraum (93) und einen zweiten Halbraum (94) teilt und die fiktive Teilungsebene (92) im Wesentlichen parallel zu der ersten und zweiten Fixierungsschwenkachse (90, 91) ausgerichtet ist und die erste und zweite Fixierungsschwenkachse (90, 91) die fiktive Teilungsebene (92) schneiden oder die erste und zweite Fixierungsschwenkachse (90, 91) vollständig in der fiktiven Teilungsebene (92) liegen.

8. Druckbehälter nach Anspruch 7,
**dadurch gekennzeichnet, dass**
in der Fixierungsposition die Verbindungsschwenkachse (89) in dem ersten Halbraum (93) angeordnet ist.

9. Druckbehälter nach Anspruch 7 oder 8,
**dadurch gekennzeichnet, dass**
in der Abhebeposition die Verbindungsschwenkachse (89) in dem zweiten Halbraum (94) angeordnet ist.

10. Druckbehälter nach einem oder mehreren der vorhergehenden Ansprüche,
**dadurch gekennzeichnet, dass**
die mit dem Mechanismus (79) auf das Anschlusselement (63) aufgebrachte Druckkraft aufgebracht ist indem der erstes Spannhebel (80) mit einer Druckkraft und vorzugsweise einem Biegemoment vorgespannt ist und der zweite Spannhebel (81) mit einer Zugkraft und vorzugsweise einem Biegemoment vorgespannt ist.

11. Brennstoffzellensystem (4), insbesondere für ein Kraftfahrzeug (5), umfassend
- eine Brennstoffzelleneinheit (1),
- wenigstens einen Druckbehälter (52),
**dadurch gekennzeichnet, dass**
der wenigstens eine Druckbehälter (52) nach einem oder mehreren der vorhergehenden Ansprüche ausgebildet ist.

12. Kraftfahrzeug (5), umfassend
- einen Antriebsmotor (8) als Elektromotor (6) und/oder Verbrennungsmotor (7),
- wenigstens einen mit einem gasförmigen Brennstoff befüllten Druckbehälter (52),
**dadurch gekennzeichnet, dass**
der wenigstens eine Druckbehälter (52) gemäß einem oder mehrerer der Ansprüche 1 bis 10 ausgebildet ist
und/oder
das Kraftfahrzeug (5) ein Brennstoffzellensystem (4) gemäß Anspruch 11 umfasst.

## Claims

1. Pressure vessel (52) for storing a fluid in an interior space (58) delimited by the pressure vessel (52), having a vessel opening (55) for discharging the fluid from the interior space (58) of the pressure vessel (52) and a connecting member (62) for fluid-tightly fixing the connecting member (62) to the pressure vessel (52), the connecting member (62) comprising
- a connecting element (63) with an opening (65) for discharging the fluid through the vessel opening (55) in the pressure vessel (52) and through the opening (65) in the connecting element (63),
- a mechanism (79) for the form-fitting and releasable fixing of the connecting element (63) to the pressure vessel (52) such that the connecting element (63) rests on the pressure vessel (52) with a compressive force,
the mechanism (79) comprises a first clamping lever (80) and a second clamping lever (81), which are pivotably connected to each other with a connection joint (83) such that, in a fixing position of the first and second clamping levers (80, 81) with respect to each other, a compressive force is applied with the mechanism (79) to the connecting element (63) and the connecting element (63) rests on the pressure vessel (52) with the compressive force,
**characterized in that**
the first clamping lever (80) is pivotably connected to the connecting element (63) with a first fixing joint (84), the second clamping lever (81) is pivotably connected to the pressure vessel (52) with a second fixing joint (85), and
the first clamping lever (80) is pivotable with respect to the connecting element (63) about a first fixing pivot axis (90) by means of the first fixing joint (84)
and
the second clamping lever (81) is pivotable with respect to the pressure vessel (52) about a second fixing pivot axis (91) by means of the second fixing joint (85).

2. Pressure vessel according to Claim 1,
**characterized in that**
in the fixing position of the first and second clamping levers (80, 81) with respect to each other, the connecting element (63) is fixed in a form-fitting manner between the pressure vessel (52) and the mechanism (79) because of a kinematic clamping effect of the first and second clamping levers (80, 81).

3. Pressure vessel according to Claim 1 or 2,
**characterized in that**
in a lifting position of the first and second clamping levers (80, 81) with respect to each other, no compressive force is applied with the mechanism (79) to the connecting element (63) because of preloading of the first and second clamping levers (80, 81).

4. Pressure vessel according to one or more of the preceding claims,
**characterized in that**
in the lifting position of the first and second clamping levers (80, 81) with respect to each other, the connecting element (63) can be moved away from the pressure vessel (52) without a kinematic clamping effect of the first and second clamping levers (80, 81) against this movement.

5. Pressure vessel according to one or more of the preceding claims,
**characterized in that**
the first clamping lever (80) and the second clamping lever (81) are pivotable with respect to each other about a connection pivot axis (89) by means of the connection joint (83).

6. Pressure vessel according to Claim 1,
**characterized in that**
the connection pivot axis (89), the first fixing pivot axis (90) and the second fixing pivot axis (91) are oriented substantially parallel.

7. Pressure vessel according to one or more of the preceding claims,
**characterized in that**
a fictitious dividing plane (92) divides the space at the pressure vessel (52) into a first half-space (93) and a second half-space (94), and the fictitious dividing plane (92) is oriented substantially parallel to the first and second fixing pivot axes (90, 91), and the first and second fixing pivot axes (90, 91) intersect the fictitious dividing plane (92) or the first and second fixing pivot axes (90, 91) lie completely in the fictitious dividing plane (92).

8. Pressure vessel according to Claim 7,
**characterized in that**
in the fixing position, the connection pivot axis (89) is arranged in the first half-space (93).

9. Pressure vessel according to Claim 7 or 8,
**characterized in that**
in the lifting position, the connection pivot axis (89) is arranged in the second half-space (94).

10. Pressure vessel according to one or more of the preceding claims,
**characterized in that**
the compressive force applied with the mechanism (79) to the connecting element (63) is applied by the first clamping lever (80) being preloaded with a compressive force and preferably with a bending moment and the second clamping lever (81) being preloaded with a tensile force and preferably with a bending moment.

11. Fuel cell system (4), in particular for a motor vehicle (5), comprising
- a fuel cell unit (1),
- at least one pressure vessel (52),
**characterized in that**
the at least one pressure vessel (52) is designed according to one or more of the preceding claims.

12. Motor vehicle (5), comprising
- a drive motor (8) as an electric motor (6) and/or an internal combustion engine (7),
- at least one pressure vessel (52) filled with a gaseous fuel,
**characterized in that**
the at least one pressure vessel (52) is designed according to one or more of Claims 1 to 10,
and/or
the motor vehicle (5) comprises a fuel cell system (4) according to Claim 11.

## Revendications

1. Réservoir sous pression (52) pour le stockage d'un fluide dans un espace intérieur (58) délimité par le réservoir sous pression (52) avec une ouverture de réservoir (55) pour l'évacuation du fluide hors de l'espace intérieur (58) du réservoir sous pression (52) et un organe de raccordement (62) pour la fixation étanche aux fluides de l'organe de raccordement (62) sur le réservoir sous pression (52), l'organe de raccordement (62) comprenant
- un élément de raccordement (63) avec une ouverture (65) pour l'évacuation du fluide à travers l'ouverture de réservoir (55) du réservoir sous pression (52) et à travers l'ouverture (65) de l'élément de raccordement (63),
- un mécanisme (79) pour la fixation par complémentarité de forme et amovible de l'élément de raccordement (63) sur le réservoir sous pression (52), de telle sorte que l'élément de raccordement (63) repose avec une force de pression sur le réservoir sous pression (52),
le mécanisme (79) comprend un premier levier de serrage (80) et un deuxième levier de serrage (81) qui sont reliés de manière pivotante l'un à l'autre par une articulation de liaison (83), de telle sorte que dans une position de fixation du premier et du deuxième levier de serrage (80, 81) l'un par rapport à l'autre avec le mécanisme (79), une force de pression est appliquée sur l'élément de raccordement (63) et l'élément de raccordement (63) repose avec la force de pression sur le réservoir sous pression (52),
**caractérisé en ce que**
le premier levier de serrage (80) est relié de manière pivotante à l'élément de raccordement (63) par une première articulation de fixation (84), le deuxième levier de serrage (81) est relié de manière pivotante au réservoir sous pression (52) par une deuxième articulation de fixation (85), et
le premier levier de serrage (80) peut pivoter au moyen de la première articulation de fixation (84) autour d'un premier axe de pivotement de fixation (90) par rapport à l'élément de raccordement (63)
et
le deuxième levier de serrage (81) peut pivoter autour d'un deuxième axe de pivotement de fixation (91) vers le réservoir sous pression (52) au moyen de la deuxième articulation de fixation (85).

2. Réservoir sous pression selon la revendication 1,
**caractérisé en ce que**
dans la position de fixation des premier et deuxième leviers de serrage (80, 81) l'un par rapport à l'autre, l'élément de raccordement (63) est fixé par complémentarité de forme entre le réservoir sous pression (52) et le mécanisme (79) en raison d'une action de serrage cinématique des premier et deuxième leviers de serrage (80, 81).

3. Réservoir sous pression selon la revendication 1 ou 2,
**caractérisé en ce que**
dans une position de soulèvement des premier et deuxième leviers de serrage (80, 81) l'un par rapport à l'autre avec le mécanisme (79), aucune force de compression n'est appliquée à l'élément de raccordement (63) en raison d'une précontrainte des premier et deuxième leviers de serrage (80, 81).

4. Réservoir sous pression selon une ou plusieurs des revendications précédentes,
**caractérisé en ce que**
dans la position de soulèvement des premier et deuxième leviers de serrage (80, 81) l'un par rapport à l'autre, un mouvement de l'élément de raccordement (63) s'éloignant du réservoir sous pression (52) peut être effectué sans action de serrage cinématique des premier et deuxième leviers de serrage (80, 81) contre ce mouvement.

5. Réservoir sous pression selon une ou plusieurs des revendications précédentes,
**caractérisé en ce que**
le premier levier de serrage (80) et le deuxième levier de serrage (81) peuvent pivoter l'un par rapport à l'autre autour d'un axe de pivotement de liaison (89) au moyen de l'articulation de liaison (83).

6. Réservoir sous pression selon la revendication 1,
**caractérisé en ce que**
l'axe de pivotement de liaison (89), le premier axe de pivotement de fixation (90) et le deuxième axe de pivotement de fixation (91) sont orientés de manière essentiellement parallèle.

7. Réservoir sous pression selon une ou plusieurs des revendications précédentes,
**caractérisé en ce que**
un plan de division fictif (92) divise l'espace sur le réservoir sous pression (52) en un premier demi-espace (93) et un deuxième demi-espace (94) et le plan de division fictif (92) est orienté essentiellement parallèlement aux premier et deuxième axes de pivotement de fixation (90, 91) et les premier et deuxième axes de pivotement de fixation (90, 91) coupent le plan de division fictif (92) ou les premier et deuxième axes de pivotement de fixation (90, 91) se trouvent entièrement dans le plan de division fictif (92).

8. Réservoir sous pression selon la revendication 7,
**caractérisé en ce que**
dans la position de fixation, l'axe de pivotement de liaison (89) est agencé dans le premier demi-espace (93).

9. Réservoir sous pression selon la revendication 7 ou 8,
**caractérisé en ce que**
dans la position de soulèvement, l'axe de pivotement de liaison (89) est agencé dans le deuxième demi-espace (94).

10. Réservoir sous pression selon une ou plusieurs des revendications précédentes,
**caractérisé en ce que**
la force de pression appliquée par le mécanisme (79) sur l'élément de raccordement (63) est appliquée **en ce que** le premier levier de serrage (80) est précontraint avec une force de pression et de préférence un couple de flexion et le deuxième levier de serrage (81) est précontraint avec une force de traction et de préférence un couple de flexion.

11. Système de pile à combustible (4), notamment pour un véhicule automobile (5), comprenant
- une unité de piles à combustible (1),
- au moins un réservoir sous pression (52),
**caractérisé en ce que**
l'au moins un réservoir sous pression (52) est réalisé selon une ou plusieurs des revendications précédentes.

12. Véhicule automobile (5), comprenant
- un moteur d'entraînement (8) sous forme de moteur électrique (6) et/ou de moteur à combustion interne (7),
- au moins un réservoir sous pression (52) rempli d'un combustible gazeux,
**caractérisé en ce que**
l'au moins un réservoir sous pression (52) est réalisé selon une ou plusieurs des revendications 1 à 10
et/ou
le véhicule automobile (5) comprend un système de pile à combustible (4) selon la revendication 11.
